# EUROPEAN PATENT SPECIFICATION

(11) **EP 3 678 521 B1**
(45) Date of publication and mention of the grant of the patent: **04.12.2024**
(21) Application number: 18783025.2
(22) Date of filing: 11.10.2018
(51) Int. Cl.: A47J 31/44

(54) **A COFFEE MACHINE WITH AN IMPROVED FILLING SYSTEM FOR THE WATER RESERVOIR**
KAFFEEMASCHINE MIT VERBESSERTEM FÜLLSYSTEM FÜR DEN WASSERTANK
MACHINE À CAFÉ DOTÉE D'UN SYSTÈME DE REMPLISSAGE AMÉLIORÉ POUR LE RÉSERVOIR D'EAU

(30) Priority: 13.10.2017 IT 201700115379
(43) Date of publication of application: 15.07.2020
(73) Proprietor: De'Longhi Appliances S.r.l., 31100 Treviso (IT)
(72) Inventor: DE' LONGHI, Giuseppe, 31100 Treviso (TV) (IT); EVANGELISTI, Paolo, 31100 Treviso (TV) (IT); MARCATO, Emanuele, 31100 Treviso (TV) (IT); ZARATIN, Enrico, 31100 Treviso (TV) (IT)
(74) Representative: Rapisardi, Mariacristina
(86) International application number: PCT/EP2018/077696
(87) International publication number: WO 2019/076721

(56) References cited:
- WO-A1-2007/082869
- WO-A1-2009/059487
- WO-A2-2006/000961
- WO-A2-2014/118725
- US-A1- 2016 150 911

## Description

The present invention relates to a coffee machine with a filling system for the improved water reservoir.

As it is known, automatic coffee machines have a reservoir for the water destined to supply the brewing unit.

The reservoir is positioned extractably in a compartment provided in the body of the coffee machine.

Extraction is often frontal and is done by sliding the water reservoir on the cup-rest grille of the drip tray with which the coffee machine is normally equipped.

Once emptied, the reservoir is extracted from the coffee machine and transported elsewhere in order to be filled for example at a municipal water supply tap or from a bottle of water.

A drawback of the known filling system is linked to the need to extract the reservoir from the coffee machine.

In fact it can occur that, in some versions of coffee machines with frontal extraction of the water reservoir, there are cups present on the drip tray grille which interfere with the extraction trajectory of the water reservoir and must therefore be appropriately removed.

In many applications the drawback has been resolved by including an orifice on the top of the coffee machine from which water can be poured into the reservoir which is positioned in the compartment underlying the orifice.

However, this solution adopted in the prior art has other drawbacks.

In particular, water that might leak from the internal side can pool and escape, putting all the electrical and electronic components it meets on its pathway at risk of damage.

Moreover this type of filling with the reservoir in the machine requires raising the jug with the water recharge above the orifice which is located on the top, and therefore at a rather high level. However, the jug, which has to be held in a raised position, is also rather heavy and this complicates the operation.

WO 2007/082869 A1 **discloses a machine for filtered coffee having a pivoting manifold able to load a fixed water reservoir.**

WO 2009/059487 **discloses a coffee machine having a manifold pivotable to enter in and load a water reservoir.**

The technical task of the present invention is, therefore, to provide a coffee machine with a filling system of the water reservoir which obviates the above-described technical drawbacks of the prior art.

Within the context of this technical task, an object of the invention is to provide a coffee machine having a filling system of the water reservoir that is convenient, practical and safe.

The technical task, as well as these and other objects, according to the present invention are attained by providing a coffee machine according to claim 1.

The filling system of the reservoir is particularly advantageous because the filling from above does not happen from the top of the coffee machine but from a lower position.

An accidental spillage of water in gravitational fall inside the coffee machine during the filling cannot therefore reach the electrical and electronic components located in the higher position.

Further, filling from the lower position is easier as it requires a smaller raising of the jug or other type of container used.

Said external wall of said machine body is preferably a vertical wall of said machine body.

Said vertical external wall of said machine body is preferably a side wall of said machine body.

In other applications said through opening can be provided on a front or rear wall of the machine body.

Said reservoir preferably comprises an overflow and a channel that connects said overflow to a drain.

Said drain is preferably provided in a cup-rest grille of a drip tray of said coffee machine.

The coffee machine preferably has a level sensor for the maximum filling level of said reservoir comprising a floating element on the free surface of the water in said reservoir and an element fixed to said machine body in a position proximal to the top of said reservoir.

Said filling means preferably further comprises a fixed manifold interposed between said reservoir and said movable manifold, said fixed manifold having a loading mouth configured so that said unloading mouth of said movable manifold remains within the space enclosed by the vertical generatrices of said loading mouth of said fixed manifold both in said operative position and in said non-operative position of said movable manifold.

In other applications said movable manifold can directly supply said reservoir. Said reservoir is horizontally extractable from the front side of said coffee machine.

Further characteristics and advantages of the invention will more fully emerge from the description of a preferred but not exclusive embodiment of the coffee machine according to the finding, illustrated by way of non-limiting example in the accompanying drawings, in which:

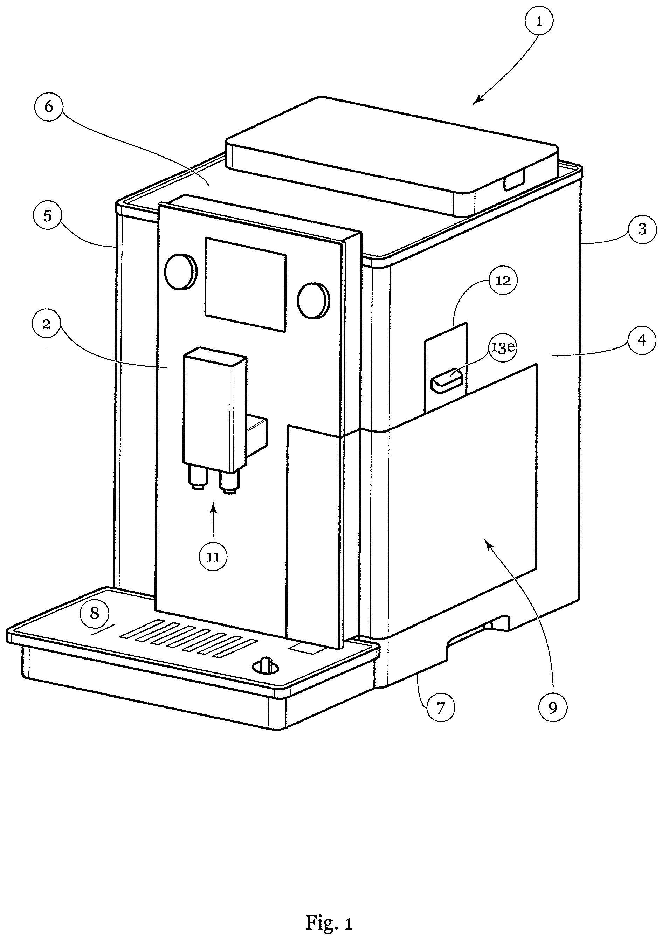

figure 1 is a perspective view of the coffee machine with the reservoir housed in the compartment thereof and the movable manifold in the non-operative position;

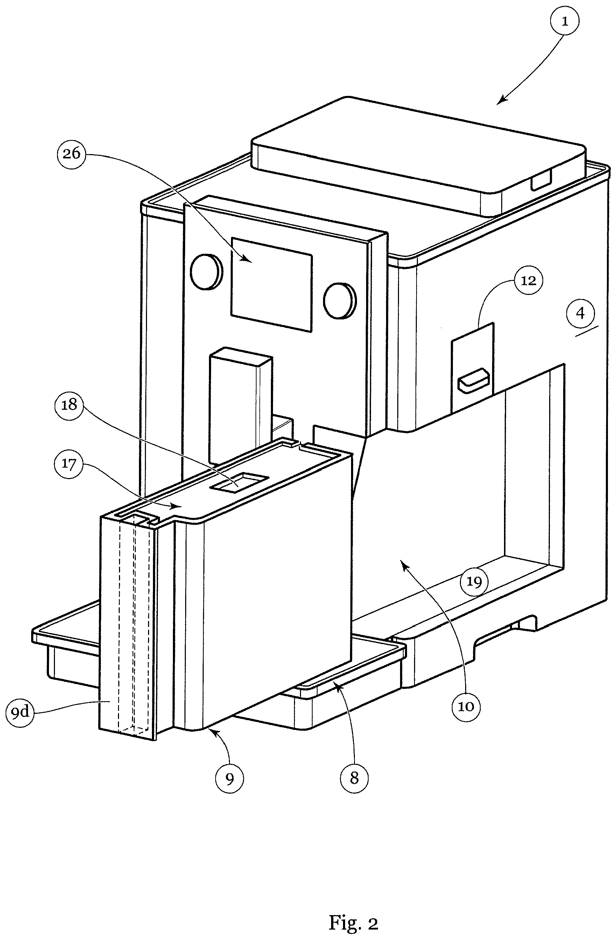

figure 2 is a perspective view of the coffee machine with the reservoir extracted from the compartment thereof and the movable manifold in the non-operative position;

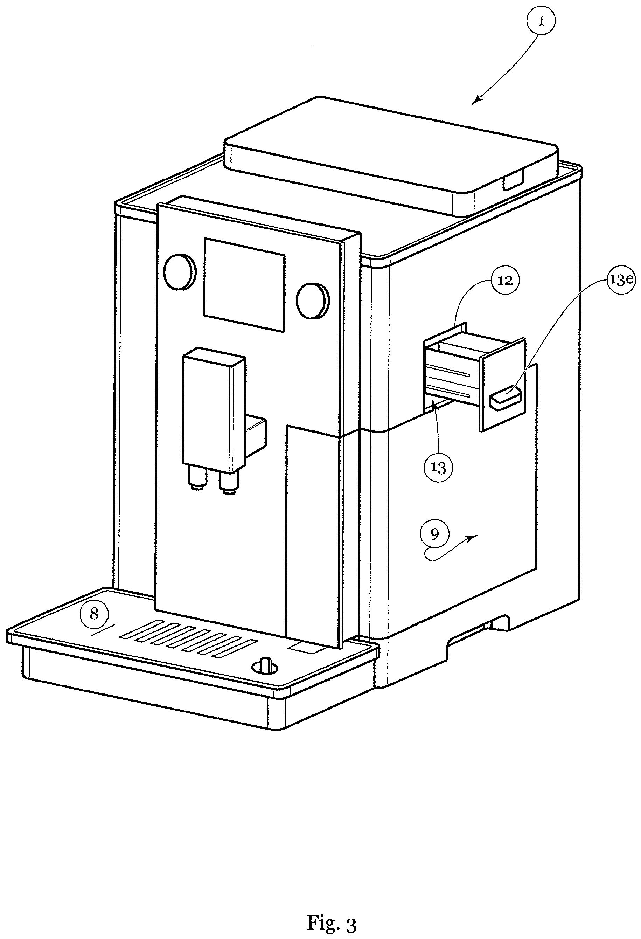

figure 3 is a perspective view of the coffee machine with the reservoir housed in the compartment thereof and the movable manifold in the operative position;

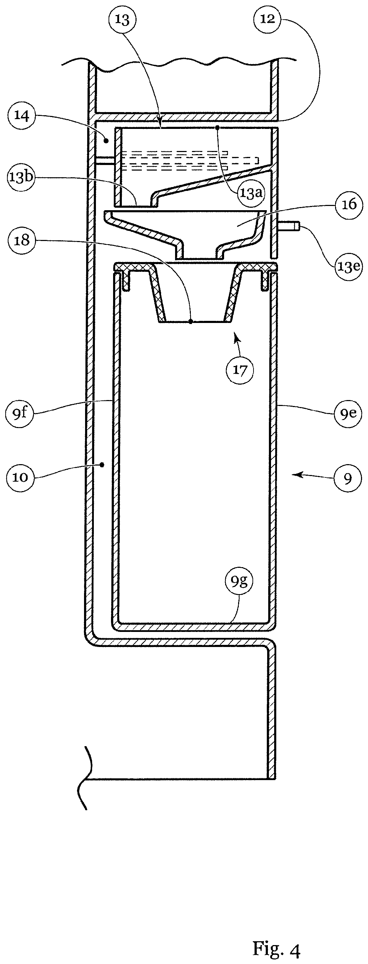

figure 4 is a detail in vertical cross-section of the coffee machine with the reservoir housed in the compartment thereof and the movable manifold in the non-operative position;

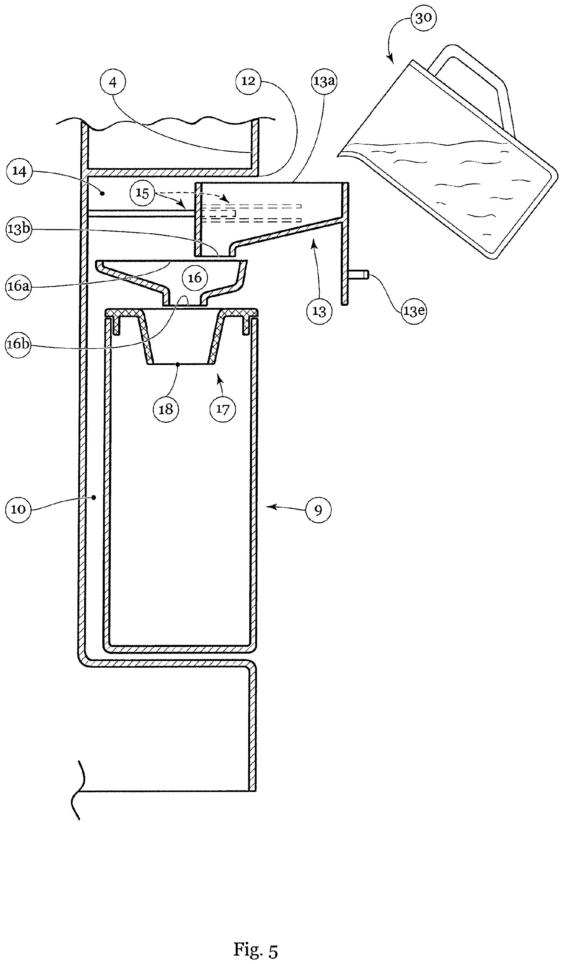

figure 5 is a detail in vertical cross-section of the coffee machine with the reservoir housed in the compartment thereof and the movable manifold in the operative position;

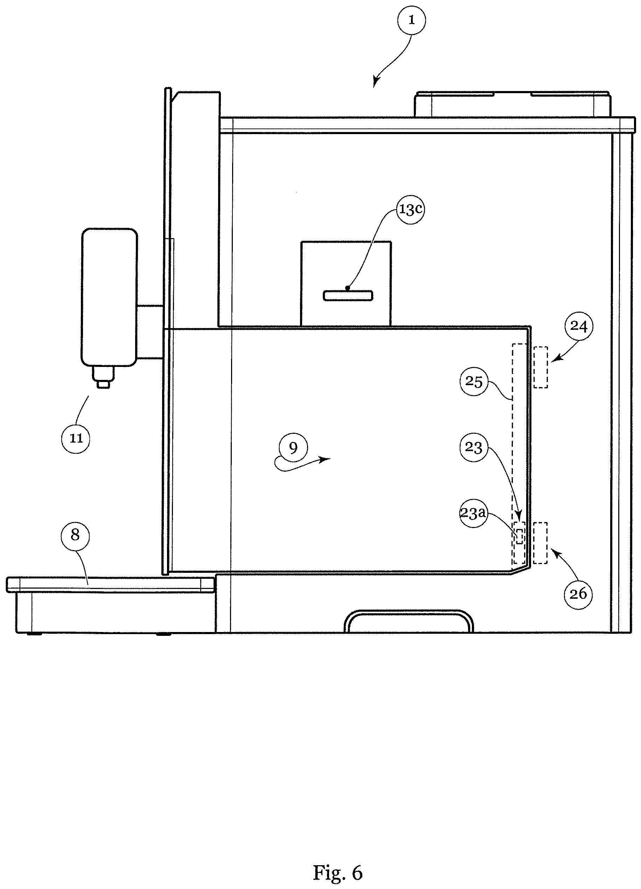

figure 6 is a raised lateral view of the coffee machine with a detail in vertical section so as to highlight the level sensors; and

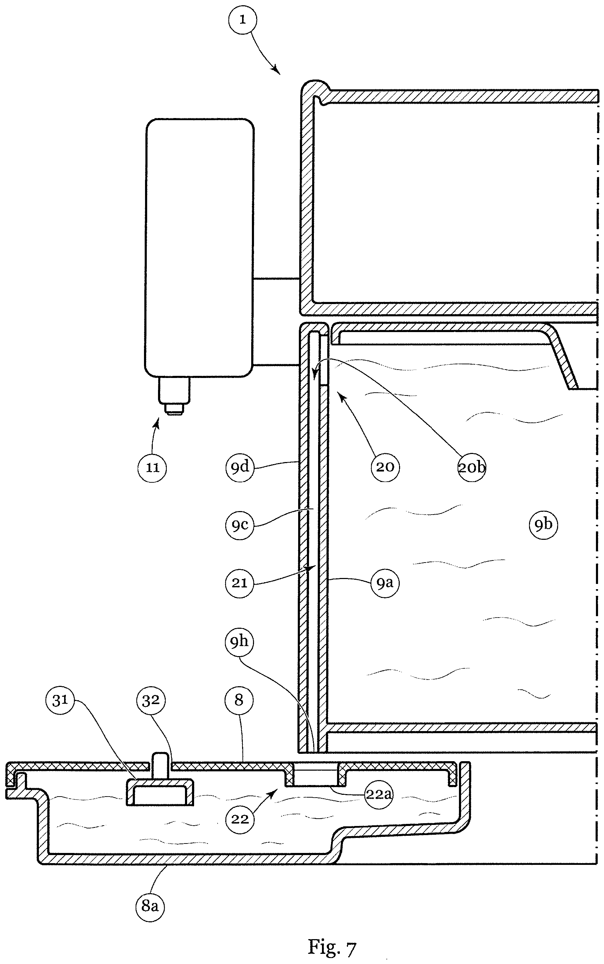

figure 7 is a detail of the coffee machine in a raised lateral view and in vertical section so as to highlight the overflow and the channel connecting the overflow to the drain.

With reference to the figures cited, a coffee machine is shown and indicated in its entirety by reference number 1.

The coffee machine 1 comprises, in a known way, a machine body formed by a shell and a frame which supports the mechanical, hydraulic and electronic components.

The machine body comprises a front wall 2 and a rear wall 3, two side walls 4, 5, a top 6 and a base 7 anteriorly of which a drip tray 8 is positioned, superiorly equipped with a support grille for the cups.

The hydraulic circuit comprises, in cascade, a water reservoir 9 housed in a housing compartment 10 provided in the machine body, a pump for supplying water (not illustrated), a boiler (not illustrated), a brewing unit (not illustrated), and an external dispenser 11 of the coffee.

The external coffee dispenser 11 is fixed to the front wall 2 of the machine body but in a variant that is not illustrated it can be fixed to an openable front door supported by the machine body.

A filling means for filling said reservoir 9 from above by gravitational fall is advantageously present in the coffee machine 1.

The filling means comprises a manifold 13 for supplying the reservoir 9 that has an upper loading mouth 13a and a lower unloading mouth 13b.

The manifold 13 is housed in the machine body in a housing compartment 14 delimited by an external wall 4 of the machine body that has a through opening 12 for access to the manifold 13.

The manifold 13 is movable between an operative position in which the loading mouth 13a is accessible for filling and a non-operative position in which it is inaccessible.

The external wall 4 of the machine body having the through opening 12 for access to the manifold 13 is a vertical wall of the machine body, in particular a side wall 4 of the machine body.

In this case the housing compartment 10 for housing the reservoir 9 is fashioned in the same side wall 4 of the machine body.

The housing compartment 10 for housing the reservoir 9 more precisely extends up to the front wall 2 of the machine body and is equipped with horizontal sliding guides 19 in which the reservoir 9 is engaged so that it can be frontally extracted from the coffee machine 1.

The housing compartment 14 for housing the manifold 13 is positioned above the housing compartment 10 for housing the reservoir 9 and communicates below with the housing compartment 10 for housing the reservoir 9.

The manifold 13 is slidable through the through opening 12, in particular with a horizontal sliding direction.

The housing compartment 14 has support guides 15 of the manifold 13 which guides the manifold 13 moving through the through opening 12.

Specifically the manifold 13 is in the form of a horizontal drawer having a front grip 13c.

In the drawer manifold 13 the loading mouth 13a is defined by the open top of the drawer and the unloading mouth 13b is an opening located posteriorly on the bottom of the drawer.

In the operative position the manifold 13 is arranged through the through opening 12 with the unloading mouth 13b located inside the housing compartment 14 for housing the manifold 13 and the loading mouth 13a at least partly located outside the side wall 4 of the machine body so as to be accessible in order to carry out the filling.

The filling means further comprises a fixed manifold 16 interposed between the reservoir 9 and the manifold 13.

The fixed manifold 16 has a loading mouth 16a configured so that the unloading mouth 13b of the movable manifold 13 remains within the space enclosed by the vertical generatrices of the loading mouth 16a of the fixed manifold 16 both in the operative position and in the non-operative position of the movable manifold 13.

Therefore, even in the non-operative position of the manifold 13, residues of water that might be present in the manifold 13 flow in any case into the reservoir 9.

Lastly, the fixed manifold 16 has an unloading mouth 16b orientated towards a filling hole 18 provided in a removable cover 17 of the reservoir 9.

The reservoir 9 comprises an overflow 20 and a channel that connects the overflow 20 to a drain 22.

The channel is positioned frontally in the reservoir 9.

The drain 22 is provided in the cup-rest grille 8 of the drip tray 8a for collecting residual drops of coffee which fall from the external coffee dispenser 11.

The overflow 20 is in particular formed by a lowered part 20b of the upper edge of an internal vertical wall 9a of the reservoir 9 which delimits a collection chamber 9b of the water.

The channel in particular comprises a chamber 9c of the reservoir 9 enclosed between the internal vertical wall 9a of the reservoir 9, the front wall 9d of the reservoir 9, the side walls 9e, 9f of the reservoir 9 and the lower face 9g of the reservoir 9.

The chamber 9c comprises an outlet hole 9h at the lower face 9g of the reservoir 9. Alternatively (not illustrated) the channel can more simply comprise a vertical groove on the external side of the front wall 9d of the reservoir 9.

In particular the drain 22 comprises a hole 22a of the cup-rest grille 8 that is vertically aligned below the outlet hole 9h of the channel.

Lastly, the coffee machine 1 has a sensor 23, 24 for the maximum filling level of the reservoir 9.

The level sensor 23, 24 comprises a floating element 23 on the free surface of the water in the reservoir 9 and an element 24 fixed to the machine body in a position proximal to the top of the reservoir 9.

For example the level sensor 23, 24 is a Hall-effect magnetic sensor comprising a magnet 23a incorporated in the floating element 23 and able to interact with a magnetic element 24 facing the compartment 10 of the housing of the reservoir 9. The floating element 23 is guided in an appropriate vertical channel 25 of the reservoir 9 which is faced by the magnetic element 24.

The maximum level sensor 23, 24 pilots a signal emitter for the user.

The signal can be of any type, for example acoustic or luminous or in the form of an indication appearing on a display on the dashboard 26 of the coffee machine 1. A minimum level sensor 23, 26 of the filling of the reservoir 9 can also be provided.

In the illustrated case the minimum level sensor 23, 26 is once more a Hall-effect magnetic sensor which comprises the same floating element 23 provided with a magnet 23a and a magnetic element 26 fixed to the machine body in a proximal position to the base of the reservoir 9 and facing the vertical channel 25 of the reservoir 9.

The minimum level sensor 23, 26, if present, also pilots a signal emitter for the user.

The operation of the filling system according to the invention appears clear from the description and illustrations and, in particular, is substantially as follows.

The already-filled reservoir 9 is housed in the compartment 10 thereof and the drawer manifold 13 is retracted in the compartment 14 thereof in the non-operative position.

In this state the reservoir 9 cannot be loaded as the loading mouth 13a is inaccessible to the user.

In fact the loading mouth 13a is entirely located on the side of the opening 12 of the side wall 4 of the machine body facing towards the inside of the housing compartment 14 of the manifold 13.

After a certain number of dispensing cycles the water level in the reservoir 9 reaches the minimum level which does not enable carrying out a subsequent dispensing cycle in the correct way.

The minimum level sensor 23, 26 pilots the controller of the coffee machine 1 which signals the event to the user.

The user brings the drawer manifold 13 into the operative position by extracting it partially from the opening 12 until the loading mouth 13a is accessible to the user and is arranged at least partly on the side of the opening 12 of the side wall 4 of the machine body facing towards the outside of the housing compartment 14 of the manifold 13.

At this point, with a jug 30 positioned above the accessible part of the loading mouth 13a the user pours the water from above into the manifold 13.

The water pours from the unloading mouth 13b of the manifold 13 into the underlying fixed manifold 16 from which it is conveyed towards the hole 18 of the cover 17 of the underlying reservoir 9.

When the water level in the reservoir 9 reaches the maximum level, the maximum level sensor 23, 24 pilots the controller of the coffee machine 1 which signals the event to the user, who then halts the filling operation.

Any excess of water is drained from the overflow 20 towards the front chamber 9c of the reservoir 9.

The outlet hole 9h of the chamber 9c unloads the drained water into the hole 22a of the cup-rest grille 8 and it collects in the tray 8a.

A float 31 is present in the tray 8a and, at the moment when it projects externally of a calibrated hole 32 of the cup-rest grille 8, it visually indicates to the user that the tray 8a needs to be emptied.

Alternatively the tray includes any other type of control of the filling level, for example a level sensor (resistive).

On completion of the filling of the reservoir 9 the drawer manifold 13 is returned into the non-operative position.

The drawer manifold 13 can have, in a variant that is not illustrated, an opening system of the push-pull type which does not require a grip.

The reservoir 9 can have a transparent window for visual inspection of the filling level.

The reservoir 9 can be frontally exposed and on a side wall, as illustrated, or the side wall of the reservoir can be protected by a wall of the machine body.

The housing compartment for housing the manifold can be obtained from the shell of the machine body, as illustrated, but also in the frame of the machine body or partially from both.

The materials used, as well as the dimensions, may in practice be of any type, according to needs and the state of the art.

## Claims

1. A coffee machine (1) comprising a machine body, the machine body having a front wall (2), a rear wall (3), two side walls (4, 5), a top (6) and a base (7), the coffee machine comprising a reservoir (9) for water, a compartment (10) in said machine body for housing said reservoir (9) in an horizontally extractable manner from the front wall (2) of the coffee machine, and a means for filling said reservoir (9) from above by gravitational fall, **characterized in that** said filling means comprises a manifold (13) for supplying said reservoir (9) that has an upper loading mouth (13a) and a lower unloading mouth (13b) located above said underlying reservoir (9), said manifold (13) is housed in said machine body in a housing compartment (14) delimited by an external wall (4) of said machine body that has a through opening (12) for access to said manifold (13), said manifold (13) being in the form of a horizontal drawer slidable with a horizontal direction through said opening (12) between an operative position in which said loading mouth (13a) is accessible for filling and a non-operative position in which it is inaccessible, said housing compartment (14) for housing said manifold (13) being positioned above said housing compartment (10) for housing said reservoir (9) and communicating below with said housing compartment (10) for housing said reservoir (9).

2. The coffee machine (1) according to the preceding claim, **characterized in that** said external wall (4) of said machine body is a vertical wall.

3. The coffee machine (1) according to any one of the preceding claims, **characterized in that** said external wall (4) of said machine body is one of the side walls (4, 5) of said machine body.

4. The coffee machine (1) according to any one of the preceding claims, **characterized in that** said reservoir (9) comprises an overflow (20) and a channel (9c) that connects said overflow (20) to a drain (22).

5. The coffee machine (1) according to the preceding claim, **characterized in that** said drain (22) is provided in a cup-rest grille (8) of a drip tray (8a) of said coffee machine (1).

6. The coffee machine (1) according to any one of the preceding claims, **characterized in that** it has a sensor (23, 24) for the maximum filling level of said reservoir (9) comprising a floating element (23) on the free surface of the water in said reservoir (9) and an element fixed to said machine body in a position proximal to the top of said reservoir (9).

7. The coffee machine (1) according to any one of the preceding claims, **characterized in that** said filling means further comprises a fixed manifold (16) interposed between said reservoir (9) and said movable manifold (13), said fixed manifold (16) having a loading mouth (16a) configured so that said unloading mouth (13b) of said movable manifold (13) remains within the space enclosed by the vertical generatrices of said loading mouth (16a) of said fixed manifold (16) both in said operative position and in said non-operative position of said movable manifold (13).

## Patentansprüche

1. Eine Kaffeemaschine (1), umfassend einen Maschinenkörper, wobei der Maschinenkörper eine Vorderwand (2), eine Rückwand (3), zwei Seitenwände (4, 5), eine Oberseite (6) und eine Basis (7) aufweist, wobei die Kaffeemaschine einen Behälter (9) für Wasser umfasst, ein Fach (10) in dem Maschinenkörper zur Unterbringung des Behälters (9) in einer horizontal ausziehbaren Weise von der Vorderwand (2) der Kaffeemaschine, und ein Mittel zum Befüllen des Behälters (9) von oben durch Schwerkraft, **dadurch gekennzeichnet, dass** das Befüllungsmittel einen Verteiler (13) zum Befüllen des Behälters (9) umfasst, der eine obere Einfüllöffnung (13a) und eine untere Auslassöffnung (13b) aufweist, die sich oberhalb des darunterliegenden Behälters (9) befinden, wobei der Verteiler (13) in dem Maschinenkörper in einem Gehäusefach (14) untergebracht ist, das durch eine Außenwand (4) des Maschinenkörpers begrenzt ist, die eine Durchgangsöffnung (12) für den Zugang zu dem Verteiler (13) aufweist, wobei der Verteiler (13) in Form einer horizontalen Schublade ausgeführt ist, die in horizontaler Richtung durch die Öffnung (12) zwischen einer Betriebsposition, in der die Einfüllöffnung (13a) zum Befüllen zugänglich ist, und einer Nicht-Betriebsposition, in der sie nicht zugänglich ist, verschiebbar ist, wobei das Gehäusefach (14) zur Aufnahme des Verteilers (13) oberhalb des Gehäusefachs (10) zur Aufnahme des Behälters (9) angeordnet ist und nach unten mit dem Gehäusefach (10) zur Aufnahme des Behälters (9) kommuniziert.

2. Die Kaffeemaschine (1) gemäß dem vorangegangenen Anspruch, **dadurch gekennzeichnet, dass** die genannte Außenwand (4) des Maschinenkörpers eine vertikale Wand ist.

3. Die Kaffeemaschine (1) gemäß einem der vorangegangenen Ansprüche, **dadurch gekennzeichnet, dass** die genannte Außenwand (4) des Maschinenkörpers eine der Seitenwände (4, 5) des Maschinenkörpers ist.

4. Die Kaffeemaschine (1) gemäß einem der vorangegangenen Ansprüche, **dadurch gekennzeichnet, dass** der genannte Behälter (9) einen Überlauf (20) und einen Kanal (9c) umfasst, der den Überlauf (20) mit einem Abfluss (22) verbindet.

5. Die Kaffeemaschine (1) gemäß dem vorangegangenen Anspruch, **dadurch gekennzeichnet, dass** der genannte Abfluss (22) in einem Tassenablagegitter (8) eines Tropfbehälters (8a) der Kaffeemaschine (1) vorgesehen ist.

6. Die Kaffeemaschine (1) gemäß einem der vorangegangenen Ansprüche, **dadurch gekennzeichnet, dass** sie einen Sensor (23, 24) für den maximalen Füllstand des genannten Behälters (9) aufweist, der ein Schwimmelement (23) auf der freien Wasseroberfläche in dem genannten Behälter (9) und ein an dem Maschinenkörper befestigtes Element in einer Position nahe der Oberseite des genannten Behälters (9) umfasst.

7. Die Kaffeemaschine (1) gemäß einem der vorangegangenen Ansprüche, **dadurch gekennzeichnet, dass** das genannte Befüllungsmittel ferner einen festen Verteiler (16) umfasst, der zwischen dem genannten Behälter (9) und dem beweglichen Verteiler (13) angeordnet ist, wobei der feste Verteiler (16) eine Einfüllöffnung (16a) aufweist, die so konfiguriert ist, dass die genannte Auslassöffnung (13b) des beweglichen Verteilers (13) sowohl in der Betriebsposition als auch in der Nicht-Betriebsposition des beweglichen Verteilers (13) innerhalb des Raums bleibt, der von den vertikalen Mantellinien der genannten Einfüllöffnung (16a) des festen Verteilers (16) eingeschlossen wird.

## Revendications

1. Une machine à café (1) comprenant un corps de machine, le corps de machine ayant une paroi avant (2), une paroi arrière (3), deux parois latérales (4, 5), un dessus (6) et une base (7), la machine à café comprenant un réservoir (9) pour l'eau, un compartiment (10) dans ledit corps de machine pour loger ledit réservoir (9) de manière extractible horizontalement à partir de la paroi avant (2) de la machine à café, et un moyen de remplissage dudit réservoir (9) par le dessus, par chute gravitationnelle, **caractérisé en ce que** ledit moyen de remplissage comprend un collecteur (13) pour alimenter ledit réservoir (9), ayant une bouche de chargement supérieure (13a) et une bouche de décharge inférieure (13b) située au-dessus dudit réservoir (9) sous-jacent, ledit collecteur (13) étant logé dans ledit corps de machine dans un compartiment de logement (14) délimité par une paroi extérieure (4) dudit corps de machine, qui comporte une ouverture traversante (12) pour accéder audit collecteur (13), ledit collecteur (13) étant sous forme d'un tiroir horizontal coulissant dans une direction horizontale à travers ladite ouverture (12) entre une position opérative dans laquelle ladite bouche de chargement (13a) est accessible pour le remplissage, et une position non opérative dans laquelle elle est inaccessible, ledit compartiment de logement (14) pour loger ledit collecteur (13) étant positionné au-dessus dudit compartiment de logement (10) pour loger ledit réservoir (9) et communiquant en dessous avec ledit compartiment de logement (10) pour loger ledit réservoir (9).

2. La machine à café (1) selon la revendication précédente, **caractérisée en ce que** ladite paroi externe (4) dudit corps de machine est une paroi verticale.

3. La machine à café (1) selon l'une quelconque des revendications précédentes, **caractérisée en ce que** ladite paroi externe (4) dudit corps de machine est l'une des parois latérales (4, 5) dudit corps de machine.

4. La machine à café (1) selon l'une quelconque des revendications précédentes, **caractérisée en ce que** ledit réservoir (9) comprend un trop-plein (20) et un canal (9c) qui connecte ledit trop-plein (20) à un drain (22).

5. La machine à café (1) selon la revendication précédente, **caractérisée en ce que** ledit drain (22) est prévu dans une grille repose-tasse (8) d'un bac d'égouttement (8a) de ladite machine à café (1).

6. La machine à café (1) selon l'une quelconque des revendications précédentes, **caractérisée en ce qu'**elle comporte un capteur (23, 24) pour le niveau de remplissage maximum dudit réservoir (9), comprenant un élément flottant (23) à la surface libre de l'eau dans ledit réservoir (9) et un élément fixé audit corps de machine dans une position proche du sommet dudit réservoir (9).

7. La machine à café (1) selon l'une quelconque des revendications précédentes, **caractérisée en ce que** ledit moyen de remplissage comprend en outre un collecteur fixe (16) interposé entre ledit réservoir (9) et le collecteur mobile (13), ledit collecteur fixe (16) ayant une bouche de chargement (16a) configurée de sorte que ladite bouche de décharge (13b) dudit collecteur mobile (13) reste dans l'espace délimité par les génératrices verticales de ladite bouche de chargement (16a) dudit collecteur fixe (16) tant dans la position opérative que dans la position non opérative dudit collecteur mobile (13).
